# FASCICULE DE BREVET EUROPEEN

(11) **EP 1 232 680 B1**
(45) Date de publication et mention de la délivrance du brevet: **31.08.2005**
(21) Numéro de dépôt: 02364007.1
(22) Date de dépôt: 12.02.2002
(51) Int. Cl.: A01B 31/00

(54) **Barre niveleuse pour outil agricole et outil agricole équipé d'une telle barre**
Landwirtschaftliche Gerätenivellierungsbalken
Agricultural tool levelling bar

(30) Priorité: 15.02.2001 FR 0102097
(43) Date de publication de la demande: 21.08.2002
(73) Titulaire: SULKY-BUREL S.A., F-35220 Chateaubourg (FR)
(72) Inventeur: Burel, Jacques, 35220 Chateaubourg (FR); Le Naour, Jean-Yves, 35220 Saint-Melaine (FR)
(74) Mandataire: Bomer, Françoise Marie

(56) Documents cités:
- FR-A- 509 120
- FR-A- 584 826
- US-A- 2 983 321
- US-A- 3 260 315
- US-A- 4 250 970

## Description

La présente invention concerne une barre niveleuse pour un outil agricole et un outil agricole muni d'une telle barre.

Une barre niveleuse est un accessoire destiné à être monté à l'avant d'un outil agricole tel qu'un semoir ou un outil de préparation des sols en position de travail. Cet outil agricole est traîné sur le sol derrière un tracteur (voir par exemple le GB-A-2 307 389).

Une telle barre niveleuse comprend une rangée de dents niveleuses ou lames élastiques montées parallèlement les unes aux autres sur un châssis. Cette barre sert à niveler le sol, c'est à dire à émietter la terre et à égaliser la surface d'un terrain avant le semis. Elle a remplacé avantageusement le système de barre niveleuse rigide de l'art antérieur qui présentait l'inconvénient d'un bourrage rapide dû à l'accumulation de cailloux et de débris de végétaux.

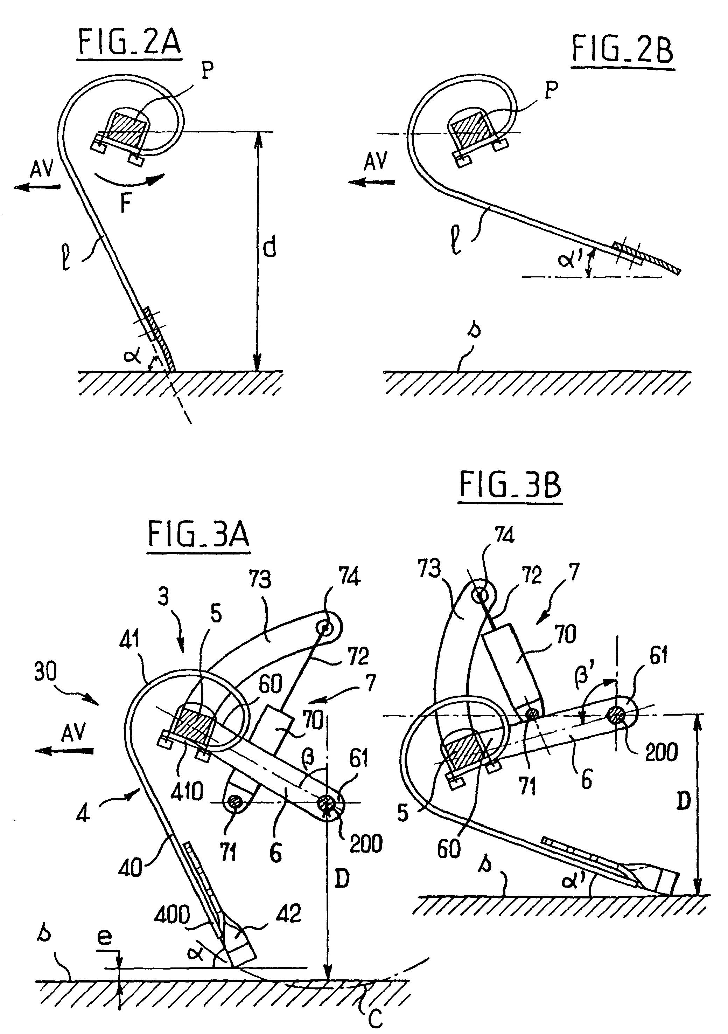

Les figures 2A et 2B annexées illustrent le mode de fixation d'une lame élastique **l** d'une barre niveleuse de l'art antérieur.

Lors de son utilisation, la barre niveleuse est déplacée vers la gauche des figures (flèche **AV**).

Chaque lame élastique **l** est constituée d'une portion rectiligne dont l'extrémité libre inférieure, dite « extrémité de travail », est destinée à travailler le sol et dont l'extrémité opposée, recourbée sur elle-même en spirale, est fixée sur une poutre transversale **p** du châssis.

La préparation des sols avant l'opération de semis peut s'effectuer soit par labourage, c'est à dire par un travail de retournement de la terre et d'élimination des débris de végétaux en profondeur, soit de façon simplifiée, par déchaumage, c'est à dire un travail de la terre beaucoup plus superficiel, laissant en place un certain nombre de débris de végétaux.

Dans le premier cas, c'est à dire sur un sol bien préparé et débarrassé des débris de végétaux, il est nécessaire de positionner les dents niveleuses dans une position proche de la verticale, pour que ces dernières agissent de façon agressive sur les mottes de terre (voir figure 2A).

Au contraire, dans le deuxième cas, c'est à dire sur un sol présentant encore des débris de végétaux, les dents doivent niveler le sol, sans toutefois créer de bourrage. Il est alors nécessaire de modifier l'angle d'inclinaison des dents par rapport à l'horizontale, pour éviter ce bourrage, (voir figure 2B).

Dans ces barres niveleuses de l'art antérieur, le réglage de l'angle d'inclinaison (ou angle d'attaque) α de la dent ou lame **l** par rapport à l'horizontale se fait par pivotement de la poutre transversale **p,** autour de son axe central.

Dans la position de la figure 2A, cet angle α est élevé. Lorsque l'utilisateur souhaite diminuer cet angle pour que l'extrémité de la lame **l** ait une action plus limitée sur le sol, il fait pivoter la poutre transversale **p** dans le sens de la flèche **F** pour amener la lame dans la position illustrée sur la figure 2B (angle α'). Or, la distance **d** entre ladite poutre transversale **p** et le sol **s** est fixe et en conséquence, le pivotement angulaire de la poutre **p**, qui se trouve en avant de l'extrémité libre de la dent, a également pour effet d'éloigner la dent du sol **s,** jusqu'à ce que celle-ci ne puisse pratiquement plus agir sur celui-ci.

La présente invention a pour but de mettre au point une barre niveleuse dont on puisse régler l'angle d'attaque α des dents par rapport au sol, tout en maintenant l'extrémité desdites dents toujours en contact, ou sensiblement en contact, avec le sol.

L'invention concerne une barre niveleuse pour outil agricole destiné à être tracté sur le sol, du type comprenant au moins une rangée de dents niveleuses, chaque dent comportant une portion rectiligne prolongée vers le haut par une portion recourbée sur elle-même en spirale, l'extrémité libre inférieure de ladite portion rectiligne, dite « extrémité de travail », étant destinée à niveler le sol et l'extrémité libre de ladite portion recourbée, dite « extrémité de fixation », étant montée sur une traverse de support, ladite portion rectiligne étant située dans un plan longitudinal vertical et étant inclinée vers le bas et vers l'arrière, par rapport au sens d'avancement de ladite barre niveleuse, de manière à former un angle aigu (α) par rapport à l'horizontale, cet angle (α) dit « angle d'attaque » étant ajustable.

Conformément à l'invention, ladite extrémité de travail de chaque dent niveleuse porte un outil adapté pour griffer le sol, ladite traverse de support est montée articulée autour d'un axe transversal porté par le châssis dudit outil agricole par l'intermédiaire d'un jeu de biellettes, cet axe étant positionné en arrière de ladite extrémité de fixation, sensiblement au-dessus de la partie centrale de la trajectoire balayée par ladite extrémité de travail au cours de l'ajustage de l'angle d'attaque (α), chaque biellette étant fixée sur ladite traverse de support par l'une des ses extrémités et étant susceptible de pivoter angulairement autour dudit axe transversal au niveau de son extrémité opposée ; la rangée de dents, la traverse de support et les biellettes définissant un ensemble de nivellement dont le déplacement angulaire est commandé par des moyens de réglage, afin d'ajuster ledit angle d'attaque (α).

Grâce à cet agencement, l'ajustement de l'angle d'inclinaison entre les dents niveleuses et l'horizontale entraîne un déplacement en hauteur très faible, en pratique peu perceptible de leur extrémité de travail. Il devient ainsi possible de modifier cet angle d'inclinaison tout en maintenant l'extrémité desdites dents niveleuses en contact avec le sol.

En effet la trajectoire en arc de cercle de l'extrémité de travail dans la zone balayée est tangente, ou pratiquement tangente, par rapport au sol.

Selon d'autres caractéristiques avantageuses et non limitatives de l'invention :
- lesdits moyens de réglage sont un vérin hydraulique dont le cylindre est monté articulé autour d'un axe solidaire du châssis et dont la tête de la tige du piston est montée articulée sur une pièce en arc de cercle solidaire de ladite traverse de support ou inversement ;
- la barre niveleuse comprend au moins deux ensembles de nivellement dont les traverses de support sont parallèles entre elles, chaque ensemble de nivellement étant muni de moyens de réglage de sa position angulaire par rapport à un axe transversal porté par le châssis ;
- la barre niveleuse comprend au moins deux ensembles de nivellement dont les traverses de support sont parallèles entre elles, en ce que seul l'un desdits ensemble de nivellement comprend des moyens de réglage de sa position angulaire par rapport au châssis, au moins l'une des biellettes de l'un desdits ensembles étant solidaire de la biellette de l'autre ensemble avec laquelle elle est alignée longitudinalement, de façon que le déplacement angulaire de l'ensemble de nivellement portant les moyens de réglage à l'aide de ses moyens de réglage, entraîne un déplacement angulaire identique des autres ensembles de nivellement ;
- l'axe transversal est monté fixe par rapport au châssis ;
- l'axe transversal est articulé autour d'un deuxième axe transversal parallèle, porté par le châssis de l'outil agricole, par l'intermédiaire d'un deuxième jeu de biellettes, chaque biellette de ce deuxième jeu étant fixée sur ledit premier axe transversal par l'une de ses extrémités et étant montée libre en rotation autour dudit deuxième axe transversal au niveau de son extrémité opposée ;
- la barre niveleuse comprend des moyens de compensation partielle du poids de l'ensemble de nivellement ;
- lesdits moyens de compensation sont constitués par un ressort dont l'une des extrémités est solidaire de l'une des biellettes et dont l'autre extrémité est solidaire d'une portion du châssis de l'outil agricole située au-dessus de ladite biellette ;
- la tension du ressort est réglable.

L'invention concerne également un outil agricole équipé d'une barre niveleuse telle que celle précitée. Cet outil agricole est par exemple une machine de préparation des sols ou un semoir et dans ce dernier cas, chaque extrémité de travail d'une dent niveleuse est alignée avec un élément semeur.

D'autres caractéristiques et avantages de l'invention apparaîtront à la lecture de la description suivante d'un mode de réalisation préféré de l'invention. Cette description est établie en faisant référence aux dessins annexés dans lesquels :
- la figure 1 est une vue schématique de côté de la barre niveleuse selon l'invention, montée sur un outil agricole de préparation des sols ;
- les figures 2A et 2B sont des schémas illustrant une dent d'une barre niveleuse de l'art antérieur, dans deux positions distinctes de fonctionnement ;
- les figures 3A et 3B sont des schémas illustrant une première variante de réalisation de la barre niveleuse selon l'invention, dans deux positions différentes de fonctionnement ;
- les figures 4A et 4B sont des schémas illustrant une deuxième variante de réalisation de la barre niveleuse selon l'invention, dans deux positions différentes de fonctionnement ;
- la figure 5 est un schéma illustrant une barre niveleuse à deux rangées de dents ;
- la figure 6 est un schéma illustrant un dispositif de compensation partielle du poids de la barre niveleuse de la figure 4, et
- les figures 7 et 8 sont des vues d'ensemble en perspective respectivement des deux variantes de réalisation des barres niveleuses des figures 3 et 4.

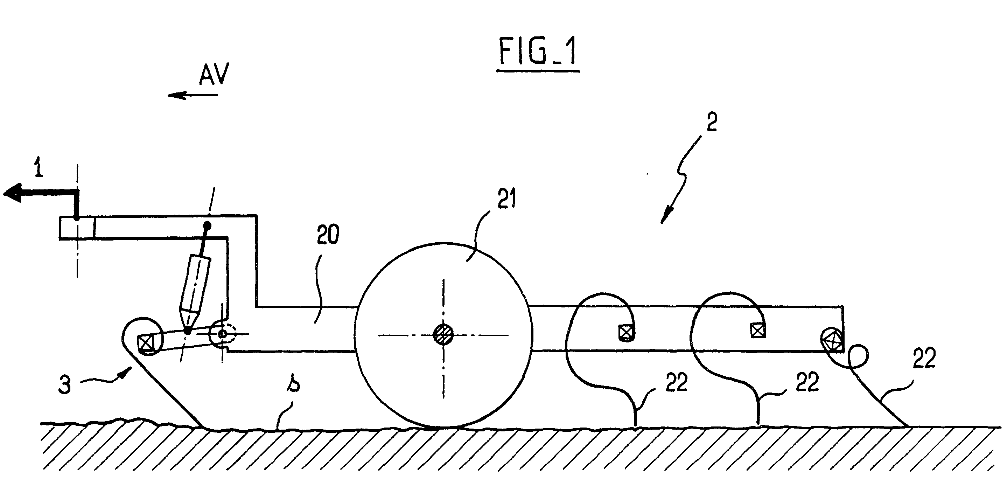

La figure 1 est une vue de côté illustrant un outil agricole 2 muni d'une barre niveleuse 3 selon l'invention, cet outil 2 étant destiné à être tracté sur le sol par un tracteur non représenté et schématisé par la flèche 1.

Le terme « sol » signifie toute terre agricole destinée à être cultivée.

La barre niveleuse 3 est placée à l'avant de l'outil agricole, par rapport au sens de déplacement **AV** de celui-ci.

L'outil agricole 2 ici représenté est un outil de préparation des sols. Cet outil permet après l'arrachage des cultures précédentes et le labourage des sols, de travailler ces sols plus superficiellement avant de semer de nouveau.

Cet outil 2 comprend un châssis mobile 20 par exemple monté sur des roues 21 ou sur un rouleau dont le rôle est de contrôler la profondeur de travail dans le sol en maintenant le châssis 20 à une hauteur donnée au-dessus du sol **s**. Il comporte différentes lames ou griffes 22 de type connu destinées à travailler le sol et à casser les mottes de terre.

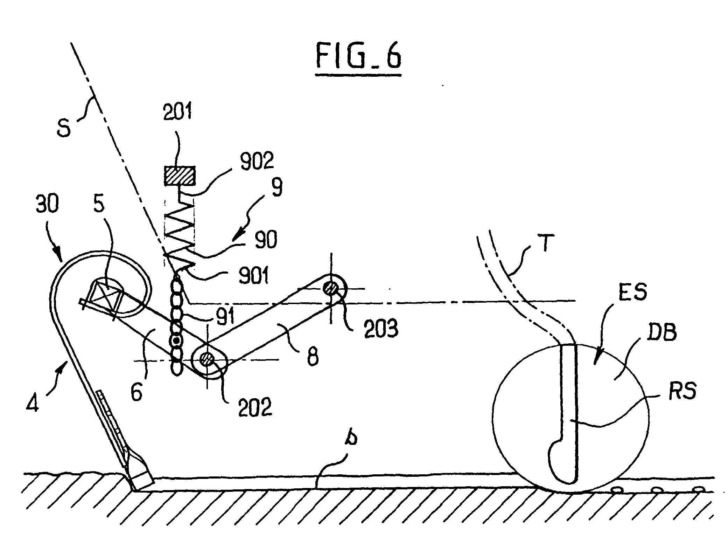

L'outil agricole 2 pourrait également être un semoir **S** comme illustré schématiquement sur la figure 6. Dans ce cas, cet outil présente la structure précitée, mais comprend en outre une trémie de stockage des graines surmontant ledit châssis, cette trémie étant reliée via des tubulures **T**, à des éléments semeurs **ES**. Dans le mode de réalisation représenté, chaque élément semeur **ES** consiste en un disque, par exemple, bombé **DB** sur le côté duquel est montée une rasette semeuse **RS** dont la fonction est de guider la graine et de la déposer à la profondeur voulue. Un tel type de semoir est bien connu de l'homme du métier et ne sera pas décrit davantage.

La barre niveleuse selon l'invention a alors pour rôle de préparer le sol avant la distribution des semences.

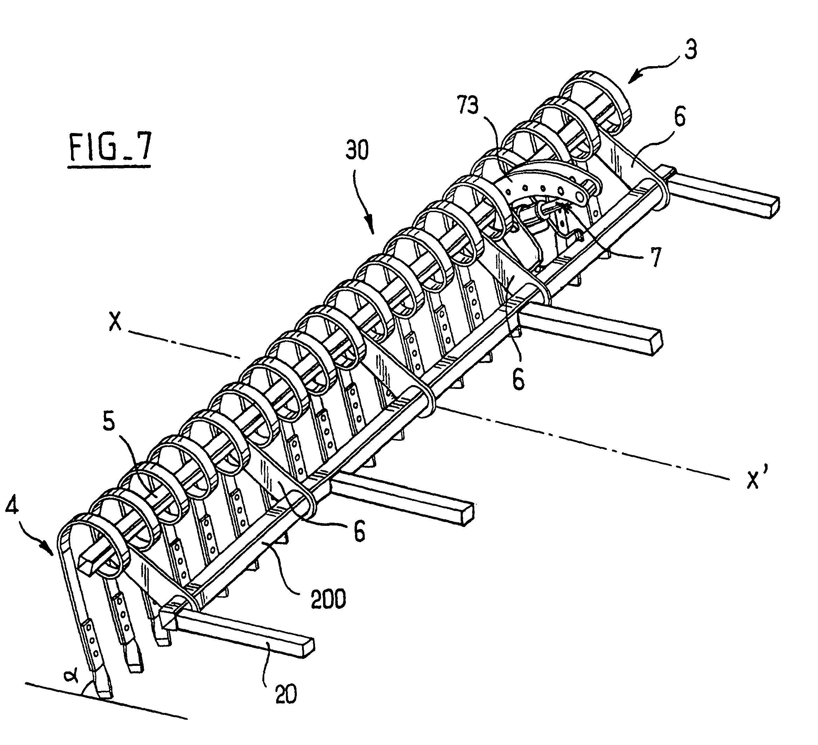

Comme illustré sur la figure 7, la barre niveleuse 3 selon l'invention comprend une rangée de dents niveleuses 4 montées en parallèle les unes aux autres sur une traverse de support 5 rectiligne. Cette traverse 5 dont la section est par exemple carrée, s'étend perpendiculairement à l'axe longitudinal **X-X'** de l'outil agricole.

Chaque dent 4 est constituée par une lame métallique élastique. Elle s'étend selon un plan longitudinal vertical.

Comme illustré sur la figure 3A, chaque dent 4 comporte une portion rectiligne 40 prolongée vers le haut par une portion 41 recourbée sur elle-même en spirale. Cette forme particulière de la dent ajoutée au matériau dont elle est constituée, lui donne son élasticité.

L'extrémité libre inférieure 400 de la portion rectiligne 40 est dite « extrémité de travail », car c'est elle qui est orientée vers le sol. Cette extrémité de travail 400 est généralement munie d'un outil 42 adapté pour griffer le sol, constituant une pièce d'usure. Cette pièce d'usure a la forme d'un plat fixé, par exemple vissé sur ladite extrémité de travail, de façon à pouvoir être interchangeable. Ce plat 42 est avantageusement vrillé d'un quart de tour afin de présenter sa face la plus étroite dans le sens de déplacement de la barre niveleuse.

L'extrémité libre 410 de la portion recourbée 41 est dite « extrémité de fixation », car elle est montée, par exemple par vissage, sur ladite traverse de support 5. Un tel montage par vissage permet de remplacer facilement une dent en cas de rupture. Ladite traverse de support 5 se trouve ainsi sensiblement au centre de la spirale.

Selon une caractéristique de l'invention, illustrée notamment sur les figures 3A, 3B et 7, ladite traverse de support 5 est montée articulée autour d'un axe transversal 200 porté par le châssis 20 dudit outil agricole, à l'aide d'un jeu de biellettes 6. Dans ce mode de réalisation, l'axe 200 est monté fixe par rapport au châssis 20.

Sur la figure 7, il est prévu cinq biellettes 6, régulièrement réparties le long de la traverse de support 5.

Comme cela apparaît mieux sur les figures 3A et 3B, chaque biellette 6 est fixée à l'une de ses extrémités 60 (en l'occurrence dirigée vers l'avant) à ladite traverse de support 5, par exemple par soudage et peut pivoter angulairement autour de l'axe transversal 200 porté par le châssis, au niveau de son extrémité opposée 61.

Dans la position de la figure 3A, l'extrémité de travail 400 de la dent niveleuse (plus exactement ici, l'extrémité du plat vrillé 42) fait un angle d'attaque aigu α avec l'horizontale, tandis que la biellette 6 fait un angle aigu β avec la verticale.

Selon une caractéristique importante de l'invention, l'axe 200 est positionné en arrière de l'extrémité de fixation 41 de la dent, sensiblement au-dessus de la partie centrale de la trajectoire en arc de cercle **C** balayée par l'extrémité de travail 400 au cours de l'ajustage de l'angle d'attaque α.

Dans la suite de la description et des revendications, la rangée de dents 4, la traverse de support 5 et les biellettes 6 définissent un ensemble dénommé « ensemble de nivellement », référencé 30.

Lorsqu'on a modifié la position angulaire de la biellette 6 pour atteindre la position illustrée sur la figure 3B, la biellette fait un angle β' obtus avec la verticale, tandis que l'extrémité de travail de la dent niveleuse fait un angle d'attaque α' plus petit que précédemment.

Le déplacement angulaire de l'ensemble de nivellement 30 s'effectue à l'aide de moyens de réglage 7 qui sont constitués par un vérin hydraulique à double effet.

Le corps de vérin, ou cylindre, 70 est monté articulé autour d'un axe 71 solidaire du châssis de l'outil agricole, tandis que la tête de la tige 72 du piston est montée articulée sur un axe 74 porté par l'extrémité d'une pièce 73 dont l'autre extrémité est soudée à la traverse de support 5. Dans le mode de réalisation illustré, la pièce 73 a une forme en arc de cercle. On notera que le montage inverse, dans lequel le cylindre 70 est monté sur la pièce 73 et la tige 72 est montée sur l'axe 71, serait également possible.

Le déplacement en translation de la tige 72 du piston du vérin hydraulique assure ainsi le déplacement angulaire de la traverse de support 5 autour de l'axe 200.

Lorsque l'ensemble de nivellement 30 se trouve dans la position illustrée sur la figure 7, l'angle d'attaque α des dents est important, proche de 90° et les dents niveleuses sont très agressives pour le sol. Cette position est utilisée pour des sols bien préparés, débarrassés de la majeur partie des débris de végétaux.

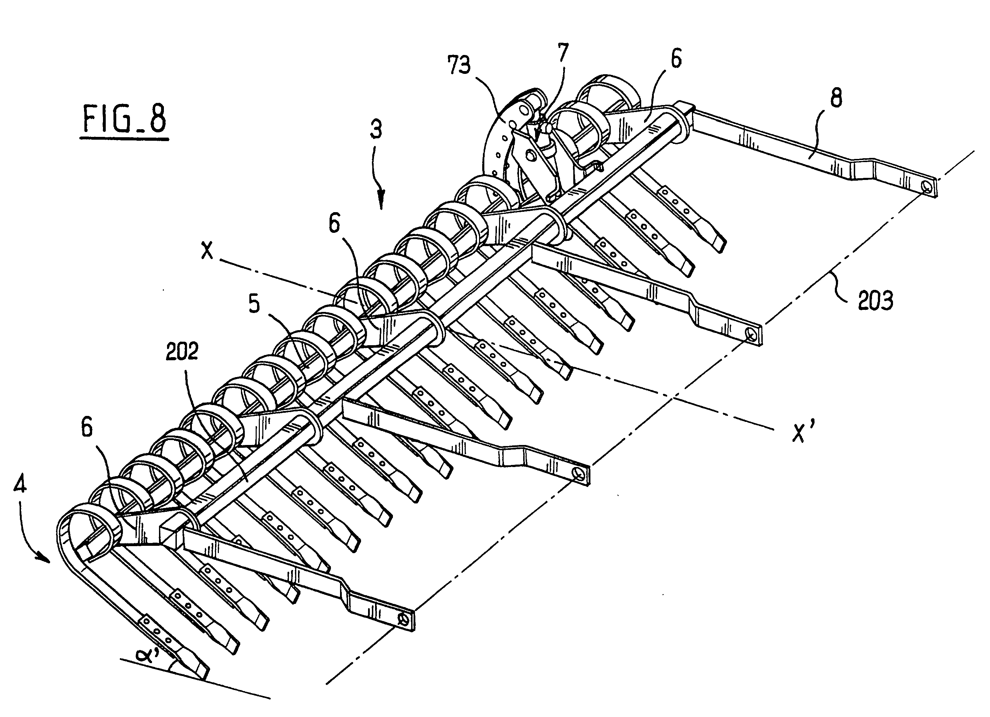

Lorsque l'ensemble de nivellement se trouve dans la position illustrée sur la figure 8, l'angle d'attaque α' est faible, voisin de 30° et les dents niveleuses sont peu agressives pour le sol. Cette position est utilisée pour des sols présentant de nombreux débris de végétaux, afin de permettre le nivellement en évitant tout risque de bourrage.

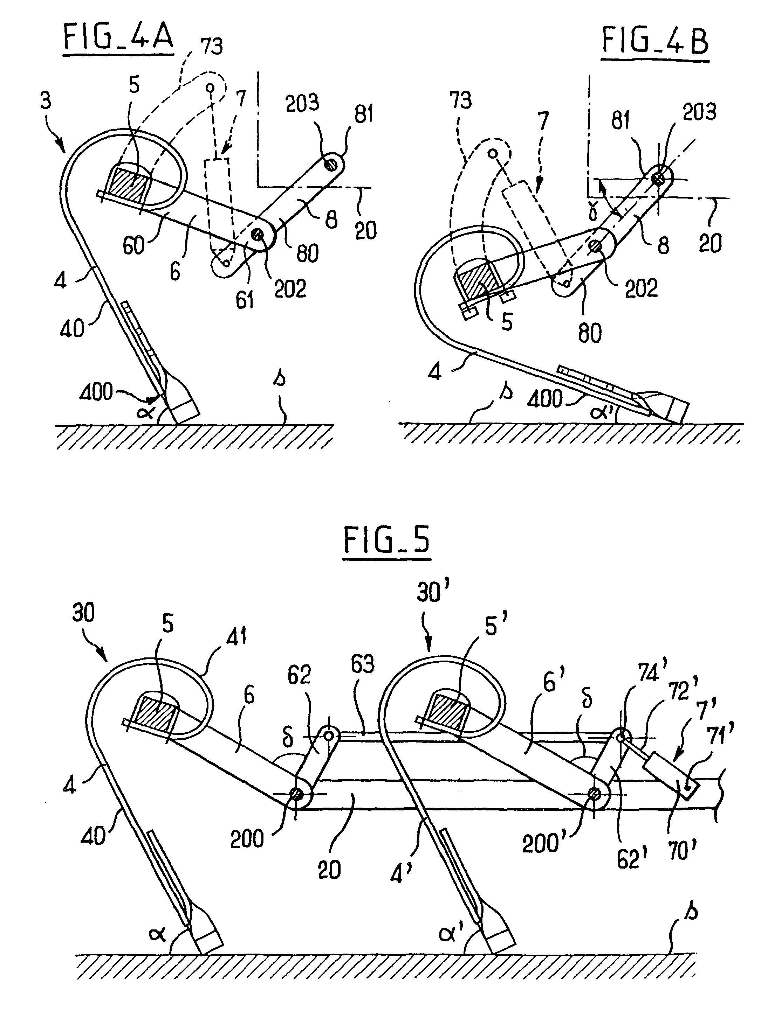

Selon une variante de réalisation illustrée sur la figure 5, il est possible de prévoir deux ensembles de nivellement (ou plus) montés en tandem (l'un derrière l'autre). Le deuxième ensemble de nivellement porte les mêmes références numériques que le premier majorées du signe prime.

Les axes transversaux 200, 200' de chaque ensemble sont parallèles entre eux et solidaires du même châssis 20.

Selon une première variante de réalisation non illustrée sur cette figure 5, les deux ensembles de nivellement sont indépendants l'un de l'autre et comportent chacun un vérin hydraulique 7 (tel que celui représenté sur la figure 3) pour le réglage de leurs orientations angulaires respectives.

Il est ainsi possible de régler le premier ensemble de nivellement 30 selon un angle d'attaque α faible, afin d'éliminer certains débris de végétaux, puis de régler le deuxième ensemble de nivellement 30' selon un angle α' plus important, afin de travailler le sol de manière plus agressive et de mieux casser les mottes de terre.

Selon une seconde variante de réalisation, illustrée sur cette figure 5, les deux ensembles de nivellement 30, 30' sont solidaires l'un de l'autre.

Dans ce cas, au moins une biellette 6 du premier ensemble de nivellement 30 est munie d'un bras de réglage 62 et la biellette 6' du deuxième ensemble de nivellement 30' voisin, alignée longitudinalement avec ladite première biellette 6, est également munie d'un bras de réglage 62'.

Chaque bras de réglage 62 (respectivement 62') est soudé à la biellette 6 (respectivement 6') correspondante, de façon que son axe longitudinal médian croise l'axe transversal 200 et présente un angle δ fixe avec l'axe de la biellette 6 ou 6' correspondante.

Les deux bras de réglage 62, 62' sont parallèles l'un à l'autre et reliés entre eux par une biellette 63 formant bras de transmission, parallèle au plan du châssis 20. Les deux bras de réglage 62, 62', le châssis 20 et la biellette 63 définissent un parallélogramme déformable.

Seul l'un des ensembles de nivellement (ici le deuxième 30') est muni d'un moyen de réglage 7' constitué par un vérin hydraulique.

Le corps de vérin ou cylindre 70' est monté articulé autour d'un axe 71' solidaire du châssis 20 tandis que la tête du piston 72' est montée sur un axe 74' traversant le bras de réglage 62'. L'actionnement du vérin 7' entraîne le déplacement angulaire du deuxième ensemble de nivellement 30' et grâce au parallélogramme déformable, produit un déplacement angulaire identique du premier ensemble de nivellement 30. Ainsi, les dents 4, 4' des deux ensembles de nivellement 30, 30' présentent le même angle d'attaque par rapport à l'horizontale (α=α').

Grâce à cette disposition, un moyen de réglage unique permet de commander simultanément la variation d'inclinaison des deux ensemble 30, 30'.

Dans une variante possible, la longueur du bras de transmission 63 est réglable (par exemple grâce à un montage télescopique). Dans ce cas, il est possible de prévoir des angles d'attaque différents (α > α'), mais réglables simultanément.

Le système de réglage de l'angle d'attaque α des dents niveleuses 4 peut encore être amélioré. En effet, comme on peut le constater sur la figure 1, la garde au sol du châssis 20 de l'outil agricole est déterminée par la hauteur des roues 21 et cette hauteur est sensiblement fixe. Elle peut seulement varier légèrement en fonction des inégalités du terrain.

Comme illustré sur les figures 3A et 3B, la distance **D** entre l'axe transversal 200 autour duquel est articulé la barre niveleuse et le sol **s** est fixe. Par ailleurs, le déplacement angulaire de la biellette 6 autour de l'axe transversal 200 du châssis entraîne un déplacement de l'extrémité de travail 400 de la dent niveleuse, (ou plus précisément de l'extrémité du plat vrillé 42), le long de l'arc de cercle **C** et dans certaines positions extrêmes, telle que celle illustrée à gauche de la figure 3, cette extrémité de travail 400 peut ne plus être en contact correct avec le sol. Il existe alors un faible écart **e** entre l'extrémité de travail et le sol **s**.

Cet écart **e** est acceptable dans la plupart des utilisations, toutefois afin d'améliorer encore le contact de la dent 4 avec le sol, il est possible de prévoir un montage tel que celui illustré sur les figures 4A et 4B et 8.

Dans ce cas, la traverse de support 5 portant les dents niveleuses 4 est montée articulée autour d'un premier axe transversal 202, par un premier jeu de biellettes 6 et cet axe transversal 202 est lui-même articulé autour d'un deuxième axe transversal 203, solidaire du châssis 20, à l'aide d'un deuxième jeu de biellettes 8. Ce deuxième axe transversal 203 s'étend parallèlement au premier axe transversal 202.

Dans le deuxième jeu de biellettes, chaque biellette 8 est fixée (par exemple par soudage), par l'une de ses extrémités 80 (vers l'avant) au premier axe transversal 202, tandis qu'elle est montée libre en rotation à son autre extrémité 81 (à l'arrière), autour dudit deuxième axe 203.

Le déplacement angulaire du deuxième jeu de biellettes 8 et donc de l'ensemble de nivellement 30 par rapport au deuxième axe transversal 203 s'effectue uniquement sous l'effet du poids de la barre niveleuse. En d'autres termes, le réglage de l'angle γ entre la biellette 8 du deuxième jeu et l'horizontale ne s'effectue pas à l'aide d'un moyen de réglage mais uniquement sous le poids de l'ensemble de nivellement.

Le réglage angulaire de la dent par rapport à la biellette 8 peut être réalisé comme précédemment, au moyen d'un système de commande 7, 73 similaire à celui du mode de réalisation des figures 3A et 3B, et représenté en traits interrompus.

Cependant le vérin 7, cette fois, est intercalé entre la pièce 73 et la biellette 8 (et non plus entre la pièce 73 et le châssis 20).

Dans l'exemple illustré le corps du vérin est articulé sur une partie prolongeant l'extrémité avant 80 de la biellette 8 au-delà (en avant) de l'axe 202.

Un tel montage permet d'avoir toujours l'extrémité de travail 400 de la dent niveleuse 4 (ou l'extrémité du plat vrillé 42) en contact avec le sol **s** puisqu'une fois l'angle d'attaque α fixé à l'aide du vérin hydraulique 7, la distance entre le premier axe transversal 202 et le sol **s** pourra varier légèrement.

On est ainsi assuré que la dent porte au sol, même si son inclinaison par rapport à l'horizontale est très importante (figure 4A) ou très faible (Figure 4B).

Enfin, comme illustré sur la figure 6, il est possible de prévoir des moyens 9 de compensation partielle du poids de l'ensemble de nivellement.

Sur cette figure, les moyens de réglage angulaire de la dent n'ont pas été représentés pour ne pas l'alourdir inutilement ; ces moyens peuvent être similaires à ceux illustrés aux figures 4A et 4B.

Les moyens de compensation partielle du poids 9 de l'ensemble de nivellement sont constitués par un ressort 90, par exemple un ressort hélicoïdal ou un ressort à boudins. L'une des extrémités 901 de ce ressort est solidaire de la biellette 6 et l'autre extrémité 902 est solidaire d'une portion 201 du châssis de l'outil agricole située au-dessus de ladite biellette 6.

Ce ressort 90 a pour effet de soulever légèrement vers le haut l'ensemble de nivellement 30. Ces moyens de compensation du poids seront utilisés pour des sols souples ou très encombrés par des débris de végétaux.

Il est également possible de prévoir des moyens 91 de réglage de la tension du ressort 90. Ces moyens de réglage 91 sont par exemple une chaîne (comme représenté sur la figure 6) ou une barre à trous, fixée d'une part à l'extrémité inférieure du ressort 90 et d'autre part à la biellette 6 et dont la longueur peut être ajustée de façon à tendre plus ou moins le ressort 90.

Sur cette figure 6, comme expliqué précédemment, l'outil agricole est un semoir. On notera que dans ce cas, chaque dent niveleuse 4 est alignée avec un élément semeur **ES**, de façon à ouvrir un sillon devant ledit élément semeur.

## Revendications

1. Barre niveleuse pour un outil agricole (2) destiné à être tracté sur le sol, du type comprenant au moins une rangée de dents niveleuses (4), chaque dent (4) comportant une portion rectiligne (40) prolongée vers le haut par une portion (41) recourbée sur elle-même en spirale, l'extrémité libre inférieure (400) de ladite portion rectiligne, dite « extrémité de travail », étant destinée à niveler le sol et l'extrémité libre (410) de ladite portion recourbée (41), dite « extrémité de fixation », étant montée sur une traverse de support (5), ladite portion rectiligne (40) étant située dans un plan longitudinal vertical et étant inclinée vers le bas et vers l'arrière, par rapport au sens d'avancement de ladite barre niveleuse, de manière à former un angle aigu (α) par rapport à l'horizontale, cet angle (α) dit « angle d'attaque » étant ajustable, **caractérisée en ce que** ladite extrémité de travail (400) de chaque dent niveleuse (4) porte un outil (42) adapté pour griffer le sol et **en ce que** ladite traverse de support (5) est montée articulée autour d'un axe transversal (200, 202) porté par le châssis (20) dudit outil agricole (2), par l'intermédiaire d'un jeu de biellettes (6), cet axe (200, 202) étant positionné en arrière de ladite extrémité de fixation (41), sensiblement au-dessus de la partie centrale de la trajectoire balayée par ladite extrémité de travail (400) au cours de l'ajustage de l'angle d'attaque (α), chaque biellette (6) étant fixée sur ladite traverse de support (5) par l'une des ses extrémités (60) et étant susceptible de pivoter angulairement autour dudit axe transversal (200, 202) au niveau de son extrémité opposée (61), la rangée de dents (4), la traverse de support (5) et les biellettes (6) définissant un ensemble de nivellement (30) dont le déplacement angulaire est commandé par des moyens de réglage (7), afin d'ajuster ledit angle d'attaque (α).

2. Barre niveleuse selon la revendication 1, **caractérisée en ce que** lesdits moyens de réglage (7) comprennent un vérin hydraulique dont le cylindre (70) est monté articulé autour d'un axe (71) solidaire du châssis (20) et dont la tête de la tige (72) du piston est montée articulée sur une pièce (73) solidaire de ladite traverse de support (5), ou inversement.

3. Barre niveleuse selon la revendication 1 ou 2, **caractérisée en ce qu'**elle comprend au moins deux ensembles de nivellement (30, 30') dont les traverses de support (5, 5') sont parallèles entre elles, chaque ensemble de nivellement (30, 30') étant muni de moyens de réglage (7) de sa position angulaire par rapport à un axe transversal (200, 200') porté par le châssis.

4. Barre niveleuse selon la revendication 1, **caractérisée en ce qu'**elle comprend au moins deux ensembles de nivellement (30, 30') dont les traverses de support (5, 5') sont parallèles entre elles, **en ce que** seul l'un desdits ensemble de nivellement (30') comprend des moyens de réglage (7') de sa position angulaire par rapport au châssis (20), au moins l'une des biellettes (6) de l'un desdits ensembles étant solidaire de la biellette (6') de l'autre ensemble avec laquelle elle est alignée longitudinalement, de façon que le déplacement angulaire de l'ensemble de nivellement (30') portant les moyens de réglage (7') à l'aide de ses moyens de réglage, entraîne un déplacement angulaire identique des autres ensembles de nivellement (30)

5. Barre niveleuse selon l'une quelconque des revendications précédentes, **caractérisée par le fait que** ledit axe transversal (200) est monté fixe par rapport au châssis (20).

6. Barre niveleuse selon la revendication 1, **caractérisée en ce que** ledit axe transversal (202) est articulé autour d'un deuxième axe transversal (203) parallèle, porté par le châssis (20) de l'outil agricole, par l'intermédiaire d'un deuxième jeu de biellettes (8), chaque biellette (8) de ce deuxième jeu étant fixée sur ledit premier axe transversal (202) par l'une de ses extrémités (80) et étant montée libre en rotation autour dudit deuxième axe transversal (203) au niveau de son extrémité opposée (81).

7. Barre niveleuse selon la revendication 6, **caractérisée en ce qu'**elle comprend des moyens (9) de compensation partielle du poids de l'ensemble de nivellement.

8. Barre niveleuse selon la revendication 7, **caractérisée en ce que** lesdits moyens de compensation (9) sont constitués par un ressort (90) dont l'une des extrémités (901) est solidaire de l'une des biellettes (6) et dont l'autre extrémité (902) est solidaire d'une portion (201) du châssis de l'outil agricole située au-dessus de ladite biellette (6).

9. Barre niveleuse selon la revendication 8, **caractérisée en ce que** la tension du ressort (90) est réglable.

10. Outil agricole équipé d'une barre niveleuse selon l'une quelconque des revendications précédentes.

11. Outil agricole selon la revendication 10, **caractérisé en ce que** cet outil est une machine de préparation des sols.

12. Outil agricole selon la revendication 10, **caractérisé en ce que** cet outil agricole est un semoir et **en ce que** chaque dent niveleuse (4) est alignée avec un élément semeur (**ES**).

## Patentansprüche

1. Nivellierbalken für ein landwirtschaftliches Gerät (2), das dazu bestimmt ist, über den Boden gezogen zu werden, wobei der Nivellierbalken der Art angehört, die mindestens eine Reihe von Nivellierzähnen (4) aufweist, jeder Zahn (4) einen geradlinigen Abschnitt (40) aufweist, der nach oben durch einen Abschnitt (41) verlängert ist, der um sich selbst spiralig gekrümmt ist, das untere, freie Ende (400) des genannten, geradlinigen Abschnitts, das "Arbeitsende" genannt ist, dazu bestimmt ist, den Boden zu nivellieren, und das freie Ende (410) des genannten, gekrümmten Abschnitts (41), das "Befestigungsende" genannt ist, auf einer Tragetraverse (5) montiert ist, der genannte, geradlinige Abschnitt (40) in einer vertikalen Längsebene gelegen und nach unten und nach hinten geneigt ist, bezogen auf die Bewegungsrichtung des genannten Nivellierbalkens, derart, daß er einen spitzen Winkel (α) bezüglich der Horizontalen bildet, und dieser Winkel (α), der "Angriffswinkel" genannt ist, einstellbar ist, **dadurch gekennzeichnet, daß** das genannte Arbeitsende (400) eines jeden Nivellierzahnes (4) ein Werkzeug (42) trägt, das dazu eingerichtet ist, den Boden zu kratzen, und daß die genannte Tragetraverse (5) um eine Querachse (200, 202) herum gelenkig angebracht ist, die vom Rahmen (20) des genannten, landwirtschaftlichen Geräts (2) mittels einer Satzes von Schwingarmen (6) getragen ist, wobei diese Achse (200, 202) hinter dem genannten Befestigungsende (41) im wesentlichen über dem mittigen Teil der Bewegungsbahn angeordnet ist, der durch das genannte Arbeitsende (400) im Verlauf der Einstellung des Angriffswinkels (α) gefolgt wird, jeder Schwingarm (6) auf der genannten Tragetraverse (5) mit einem seiner Enden (60) befestigt ist und imstande ist, winklig um die genannte Querachse (200, 202) auf Höhe seines entgegengesetzten Endes (61) zu schwenken, und die Reihe von Zähnen (4), die Tragetraverse (5) und die Schwingarme (6) eine Nivellierbaugruppe (30) bilden, deren winklige Verlagerung durch Reguliermittel (7) gesteuert wird, um den genannten Angriffswinkel (α) einzustellen.

2. Nivellierbalken nach Anspruch 1, **dadurch gekennzeichnet, daß** die genannten Reguliermittel (7) eine hydraulische Hubeinrichtung aufweisen, deren Zylinder (70) um eine Achse (71) herum schwenkbar angebracht ist, die fest mit dem Fahrgestell (20) verbunden ist, und deren Kopf der Kolbenstange (72) gelenkig auf einem Teil (73) angebracht ist, das fest auf der genannten Tragetraverse (5) angebracht ist, oder umgekehrt.

3. Nivellierbalken nach Anspruch 1 oder 2, **dadurch gekennzeichnet, daß** er wenigstens zwei Nivellierbaugruppen (30, 30') umfaßt, deren Tragetraversen (5, 5') zueinander parallel sind, wobei jede Nivellierbaugruppe (30, 30') mit Reguliermitteln (7) ihrer Winkelposition bezüglich einer Querachse (200, 200') versehen ist, die vom Fahrgestell getragen ist.

4. Nivellierbalken nach Anspruch 1, **dadurch gekennzeichnet, daß** er wenigstens zwei Nivellierbaugruppen (30, 30') umfaßt, deren Tragetraversen (5, 5') zueinander parallel sind, und daß alleine die eine der genannten Nivellierbaugrupen (30') Reguliermittel (7') ihrer Winkelposition bezüglich des Fahrgestells (20) umfaßt, wobei wenigstens der eine der Schwingarme (6) der einen der genannten Baugruppen fest mit dem Schwingarm (6') der anderen Baugruppe verbunden ist, auf die er in Längsrichtung ausgerichtet ist, derart, daß die winklige Verlagerung der Nivellierbaugruppe (30'), die die Reguliermittel (7') trägt, mit Hilfe ihrer Reguliermittel eine identische Winkelverlagerung der anderen Nivellierbaugruppen (30) herbeiführt.

5. Nivellierbalken nach irgendeinem der vorangehenden Ansprüche, **dadurch gekennzeichnet, daß** die genannte Querachse (200) bezüglich des Rahmens (20) fest angebracht ist.

6. Nivellierbalken nach Anspruch 1, **dadurch gekennzeichnet, daß** die genannte Querachse (202) um eine zweite, parallele Querachse (203) herum gelenkig gelagert ist, die vom Rahmen (20) des landwirtschaftlichen Geräts mittels eines zweiten Satzes von Schwingarmen (8) getragen ist, wobei jeder Schwingarm (8) dieses zweiten Satzes auf der genannten ersten Querachse (202) mit einem seiner Enden (80) befestigt ist und auf Höhe seines entgegengesetzten Endes (81) um die genannte zweite Querachse (203) drehbeweglich angebracht ist.

7. Nivellierbalken nach Anspruch 6, **dadurch gekennzeichnet, daß** er Mittel (9) zur teilweisen Kompensierung des Gewichtes der Nivellierbaugruppe umfaßt.

8. Nivellierbalken nach Anspruch 7, **dadurch gekennzeichnet, daß** die genannten Kompensiermittel (9) von einer Feder (90) gebildet sind, deren eines Ende (901) fest mit einem der Schwingarme (6) und deren anderes Ende (902) fest mit einem Abschnitt (201) des Rahmens des landwirtschaftlichen Geräts verbunden ist, der über dem genannten Schwingarm (6) gelegen ist.

9. Nivellierbalken nach Anspruch 8, **dadurch gekennzeichnet, daß** die Spannung der Feder (90) regulierbar ist.

10. Landwirtschaftliches Gerät, das mit einem Nivellierbalken nach irgendeinem der vorangehenden Ansprüche ausgestattet ist.

11. Landwirtschaftliches Gerät nach Anspruch 10, **dadurch gekennzeichnet, daß** dieses landwirtschaftliche Gerät eine Maschine zur Bodenvorbereitung ist.

12. Landwirtschaftliches Gerät nach Anspruch 10, **dadurch gekennzeichnet, daß** dieses Gerät eine Sä- bzw. Drillmaschine ist, und daß jeder Nivellierzahn (4) auf ein Sä- bzw. Drillelement (ES) ausgerichtet ist.

## Claims

1. A leveler bar for an agricultural implement (2) designed to be towed over the ground, the bar being of the type comprising at least one row of leveler tines, each tine (4) comprising a rectilinear portion (40) extended upwards by a spirally-wound curved portion (41), the free bottom end (400) of said rectilinear portion, referred to as the "working end", being designed to level the ground, and the free end (410) of said curved portion (41), referred to as the "fastening end", being mounted on a supporting cross-bar (5), said rectilinear portion (40) being situated in a vertical longitudinal plane and being inclined downwards and rearwards relative to the direction of forward advance of said leveler bar, so as to form an acute angle (α) relative to the horizontal, said angle (α), referred to as the "angle of attack", being adjustable, the bar being **characterized in that** said working end (400) of each leveler tine (4) carries a tool (42) adapted to scratch the ground, and **in that** said supporting cross-bar (5) is mounted hinged about a transverse shaft carried by the frame (20) of said agricultural implement (2), via a set of links (6), said shaft (200, 202) being positioned behind said fastening end (41), substantially above the middle portion of the trajectory swept by said working end (400) while the angle of attack (α) is being adjusted, each link (6) being fastened to said supporting cross-bar (5) at one of its ends and being capable of pivoting angularly about said transverse shaft (200, 202) at its opposite end (61), the row of tines (4), the supporting cross-bar (5), and the links (6) defining a leveler assembly (30) with angular displacement controlled by adjustment means (7) in order to adjust said angle of attack (α).

2. A leveler bar according to claim 1, **characterized in that** said adjustment means (7) comprise a hydraulic actuator having its cylinder (70) mounted hinged about a shaft (71) secured to the frame (20), and having the head of its piston rod (72) mounted hinged to a part (73) secured to said supporting cross-bar (5), or vice versa.

3. A leveler bar according to claim 1 or claim 2, **characterized in that** it includes at least two leveler assemblies (30, 30') having mutually parallel supporting cross-bars (5, 5'), each leveler assembly (30, 30') being provided with means (7) for adjusting its angular position relative to a transverse shaft (200, 200') carried by the frame.

4. A leveler bar according to claim 1, **characterized in that** it includes at least two leveler assemblies (30, 30'), having mutually parallel supporting cross-bars (5, 5'), **in that** only one of said leveler assemblies (30') includes means (7') for adjusting its angular position relative to the frame (20), at least one of the links (6) of one of said assemblies being secured to the link (6') of the other assembly with which it is in longitudinal alignment, so that angular displacement of the leveler assembly (30') carrying the adjustment means (7') under drive from its adjustment means entrains identical angular displacement of the other leveler assemblies (30).

5. A leveler bar according to any preceding claim, **characterized by** the fact that said transverse shaft (200) is mounted stationary relative to the frame (20).

6. A leveler bar according to claim 1, **characterized in that** a second set of links (8) hinges said transverse shaft (202) about a second transverse shaft (203) that is parallel thereto and that is carried by the frame (20) of the agricultural implement, each link (8) of the second set being fastened to said first transverse shaft (202) at one of its ends (80) and being free to turn about said second transverse shaft (203) at its opposite end (81).

7. A leveler bar according to claim 6, **characterized in that** it includes compensation means (9) for compensating in part for the weight of the leveler assembly.

8. A leveler bar according to claim 7, **characterized in that** said compensation means (9) are constituted by a spring (90) having one of its ends (901) secured to one of the links (6) and having its other end (902) secured to a portion (201) of the frame of the agricultural implement that is situated above said link (6).

9. A leveler bar according to claim 8, **characterized in that** the tension of the spring (90) is adjustable.

10. An agricultural implement fitted with a leveler bar according to any preceding claim.

11. An agricultural implement according to claim 10, **characterized in that** said implement is a ground preparation machine.

12. An agricultural implement according to claim 10, **characterized in that** said agricultural implement is a sowing machine, and **in that** each leveler tine (4) is in alignment with a sowing element (ES).
